# EUROPEAN PATENT SPECIFICATION

(11) **EP 0 478 337 B1**
(45) Date of publication and mention of the grant of the patent: **22.12.1999**
(21) Application number: 91308815.9
(22) Date of filing: 27.09.1991
(51) Int. Cl.: G06F 3/06, G11B 20/10, G11B 5/012

(54) **Process of storing data on, or retrieving data from a plurality of disks**
Verfahren zur Datenspeicherung auf und Datenwiedergabe von mehreren Platten
Procédé de stockage ou de restitution de données à partir d'une pluralité de disques

(30) Priority: 28.09.1990 US 590634
(43) Date of publication of application: 01.04.1992
(73) Proprietor: XEROX CORPORATION, Rochester, New York 14644 (US)
(72) Inventor: Eldridge, George Lee, Long Beach, CA 90815-1945 (US)
(74) Representative: Grünecker, Kinkeldey, Stockmair & Schwanhäusser Anwaltssozietät

(56) References cited:
- EP-A- 0 369 707
- WO-A-90/06550
- PHILIPS TELECOMMUNICATION REVIEW vol. 47, no. 3, September 1989, HILVERSUM NL pages 35 - 50 , XP72644 F ZALM 'P9X00 MAGNETIC DISK I/O'
- IEEE TRANSACTIONS ON COMPUTERS vol. 40, no. 7, 7 June 1991, NEW YORK US pages 801 - 810 , XP259679 M KIM ET ALL 'ASYNCHRONOUS DISK INTERLEAVING'
- MICHELLE Y. KIM, ASSER N. TANTAWI: "Asynchronous Disk Interleaving", IBM T.J. WATSON RESEARCH CENTER, TECH. REPORT RC12497 (#56190), Yorktown Heights, NY, 02-09-1987, vol. , no. , pages 1 to 62

## Description

The invention relates to a process of storing data on, or retrieving data from, a plurality of disks.

Commercial off-the-shelf high-performance disk drives may not have enough bandwidth or capacity to provide real-time storage and retrieval of digitized page images in a modern high-speed reprographic system. The alternatives include specially designed systems which are expensive.

The prior art includes Asynchronous Disk Interleaving, KIM, Michelle Y. and TANTAWI, Asser N., IBM T. J. Waston Research Center, 30.01.1987, Tech. Report RC 12497 (#56190), which suggests assigning subblocks of a partitioned data block to disk units, in a synchronized system, using modulo n. Further, U.S. Patent No. 4,870,643, Parallel Drive Array Storage describes a system having five standard commercial Winchester disk drives. However, in this reference one disk is designated as the master controller to synchronize and control the system.

It is an object of the present invention to provide a system which uses low-cost commercial disk drives in parallel in a way that is transparent to the user, and which gives greater flexibility than prior art arrangements by ensuring that all of the disk drives operate on an equal basis, each of which deciding independently how to process the data.

Accordingly, the present invention provides a process of storing a block of data residing in memory means onto a number n of identical disks, characterised by computer segmenting said block into sectors, or subblocks, and numbering said subblocks from 0, and using a plurality of numbered disk drives, or disks, coupled to receive data from said memory means to store said data onto said disks whereby each numbered disk drive is used to store the same-numbered subblocks after renumbering the subblocks modulo n.

An aspect of the invention is to also provide a process of retrieving a block of data which is divided into subblocks numbered modulo n, residing on a number n of identical disks where said disks are numbered 0 to n-1, characterised by using each disk drive from a plurality of disk drives to send its subblocks to the correct location in memory to form said block of data.

This invention comprises up to four physical disk drives and drive controllers that act together to form a single logical disk. The disk drives are connected together in parallel to increase capacity and bandwidth by dividing up data into subblocks and sending every n-th subblock to each drive. Assume that the data stream is divided into subblocks of, for example, 512 or 1024 bytes. In the case of four disk drives, subblocks 1, 5, 9,... are stored by the first drive, subblocks 2, 6, 10,... are stored by the second, etc. Each drive operates at its own speed so that one drive may finish before the next, in which case it is free to start on the next job. Finally, all of this software is in the disk controllers so that the system is completely transparent to the using computer.

The invention will be described further, by way of example, with reference to the accompanying drawings, in which:
Fig 1 shows the control structures,
Figs 2a - 2o are flow charts of the DISK Controller microcode, and
Fig 3 is an overview of the system in which the embodiment of this invention operates.

This invention is used in connection with a host system having shared memory distributed processing, each drive communicating with the system main memory through a processor and cache. Such a system is described in commonly assigned U.S. Patent No. 4,843,542, "Virtual Memory Cache For Use In Multi-Processing Systems". The disks communicate with the system software through data structures in system memory. Control and status information is passed through a CSB (Control/Status Block). Commands are passed through IOCBs (I/O Control Blocks). The disks support read data and write data commands plus drive control commands.

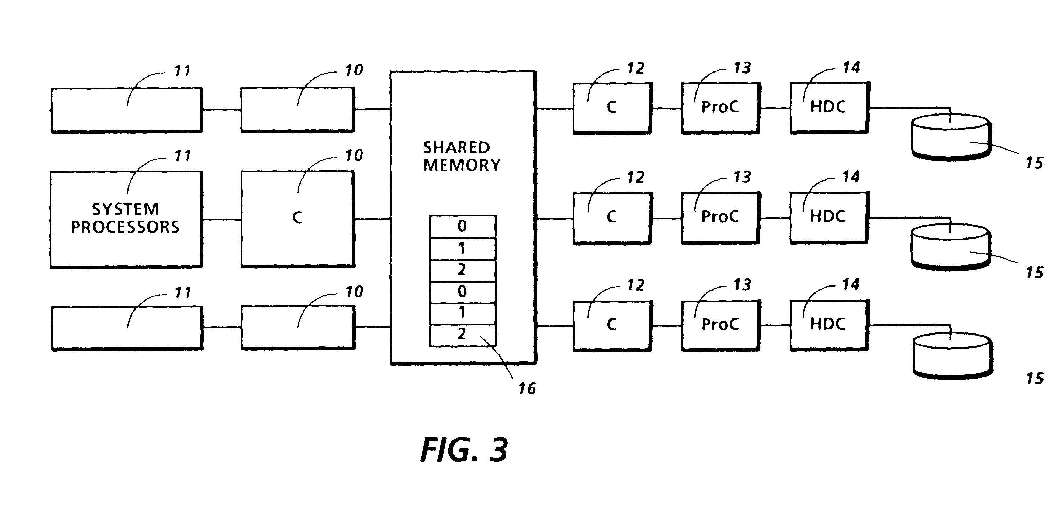

This cache system is shown in Fig 3. Several cache memories 10 are connected to a central main memory, and to processors 11. The processors 11 are connected to the host system and control the host system processes. In this embodiment of the invention, three additional cache memories 12 are used to control three processors 13 which, in turn, control three disk drives 14, labelled HDC in this figure. The data block 16 to be stored into the disks 15 is segmented by the processors 11 into subblocks of 512 bytes each, shown numbered 0, 1, 2, 0, 1, 2. At this point, each drive 14 is then allowed to store the subblocks having the same number.

The drives selected for this embodiment are high-performance Winchester disk drives and use the ESDI (Enhanced Small Device Interface) high-performance standard interface; however, the drive interface is not critical and other interfaces may be used. ESDI specifies the interconnection of the controller to the drive and the timing of the interface.

The interconnection from the controller to the drive consists of two cables; one carrying control signals and the other carrying data signals. The control cable carries head select signals, read gate, write gate, and serial commands to the drive. It also carries index pulses, sector pulses, command results and status from the drive to the controller. The data cable carries NRZ (non-return-to-zero) data and clock signals between the drive and the controller.

In addition to the control and data cables, a power cable is required to supply +5 V and +12 V to the drive. The data path functions for each disk are handled by a commercial disk controller device such as the National DDC.

The disk control functions and DMA (direct memory access) are handled by a processor. Tasks include communicating with the system software, driving the ESDI serial command interface to the disk, issuing data transfer commands to the disk controller device, performing DMA transfers of disk data over the cache stream channels, and recovering from errors.

The individual disk drives that form this system do not need to be interconnected in any way. However, if spindle synchronization of the drives is possible, it will improve performance slightly by reducing the rotational latency.

The disk microcode and the software interface have been designed to allow up to four physical disks to operate in parallel as a single logical disk. The single logical disk is referred to as a "DISK". For example, if three disks are used to make a DISK, then the DISK will have three times the storage capacity and three times the bandwidth of a single disk. To the higher-level software the DISK behaves like a single physical disk. The individual controllers that make up the DISK all share a single CSB. Also, there is only one IOCB for each command to the DISK; each IOCB is used by all the controllers.

An additional requirement of the DISK is that it supports dynamic extension of IOCB chains and suspension of execution of an IOCB chain. The ability to suspend the execution of an IOCB chain is an important feature. It forms the basis for prioritized disk channels. If a low-priority IOCB chain is being executed and a higher-priority request is sent to the disk driver, the low-priority IOCB chain may be interrupted via the suspend to allow the higher-priority IOCBs to be executed. Extending IOCB chains on-the-fly improves the efficiency of the system by avoiding unnecessary starting and stopping of the controllers.

The implementation of the DISK was done in such a way that all of the controllers and their microcode are identical. There are no masters or slaves, but rather all controllers are equal. The individual controllers communicate with each other via semaphores in the CSB and IOCBs. In order for the individual controllers, that make up a DISK, to cooperate, they must be given two pieces of information when they are initialized. They must know how many disks the DISK is composed of, and they must be assigned a number. The first number tells how each task will be divided up and the second number defines which portion of the task the particular controller is responsible for.

The partitioning of the data for the individual disks of the DISK is done at the sector level. For example, given a DISK composed of three disks each with 32 sectors per track, there would be 96 sectors per TRACK (a TRACK is composed of single track from each of the disks). The controller assigned number zero would be responsible for every third sector beginning with sector one (i.e. 1, 4, 7,..., 94). The controller assigned number one is responsible for every third sector beginning with sector two (i.e. 2, 5, 8,..., 95). The remaining sectors (i.e. 3, 6, 9,..., 96) go to the controller assigned number two. When an IOCB is passed to the DISK for execution, each controller reads the IOCB and begins transferring the data for the sectors it is responsible for.

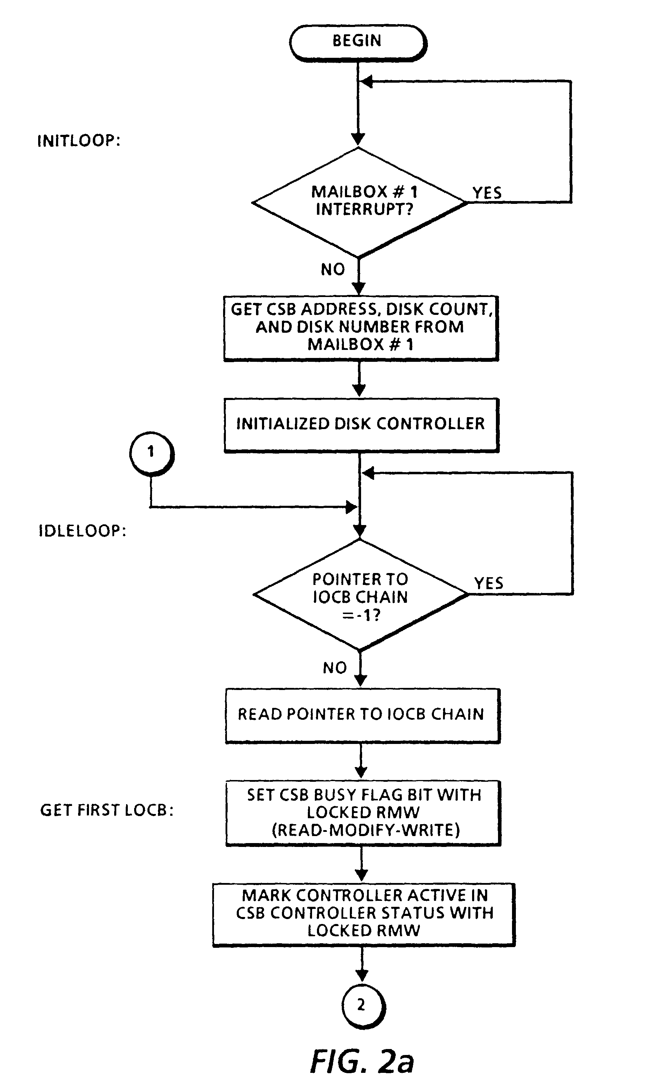

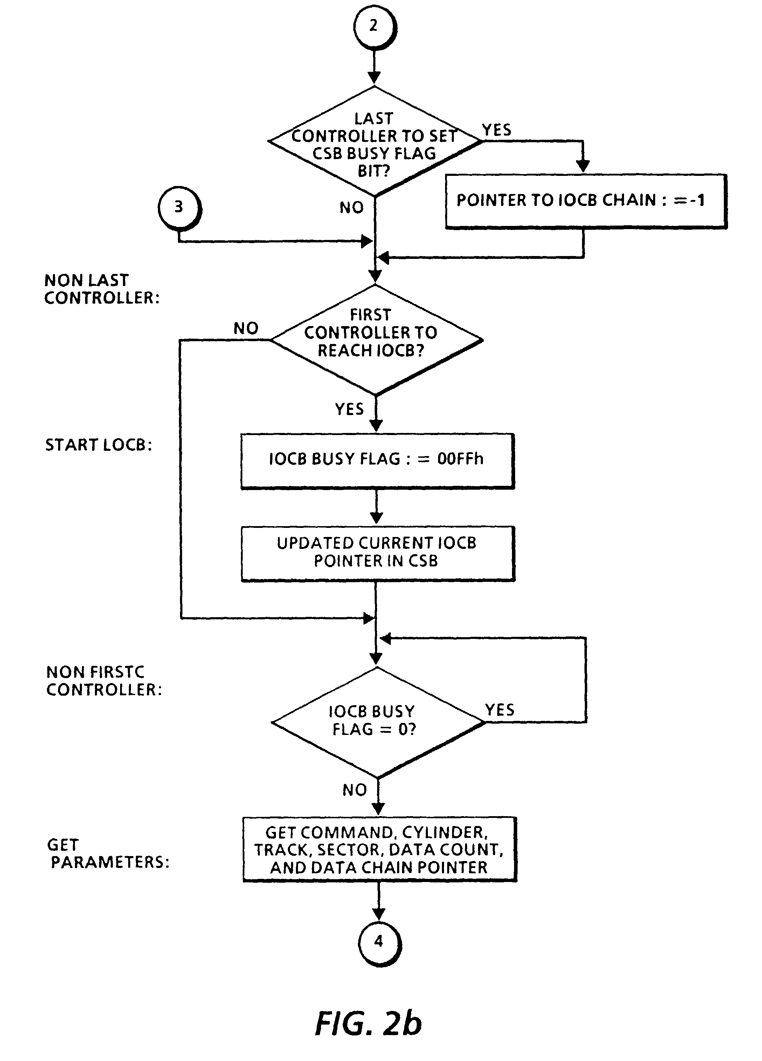

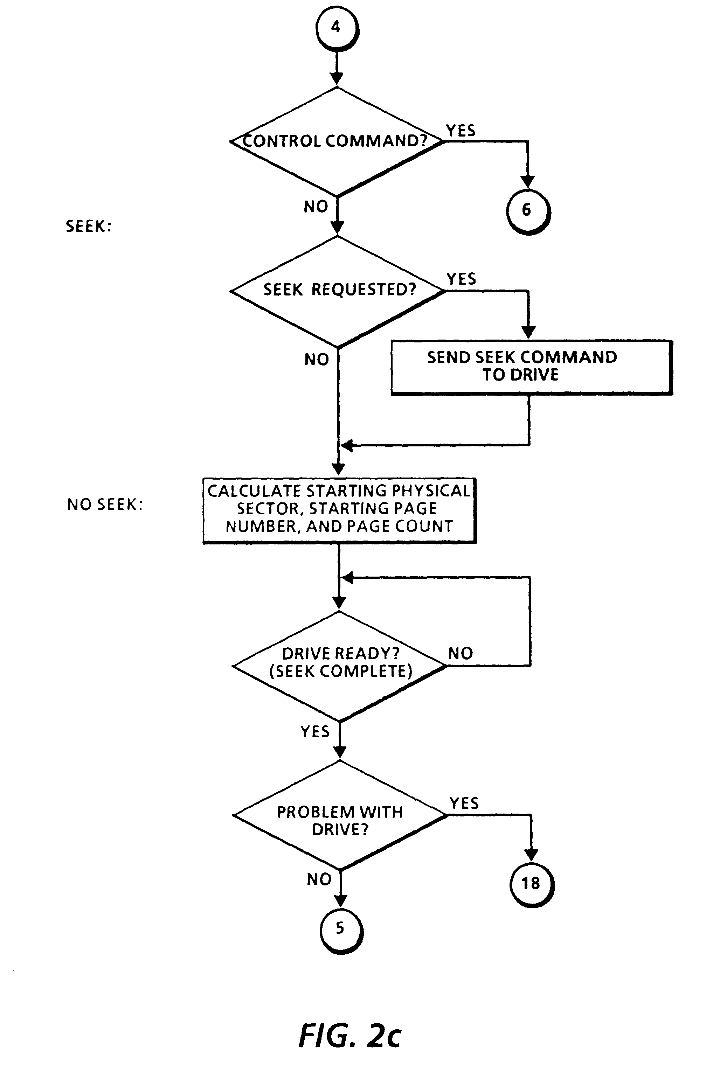

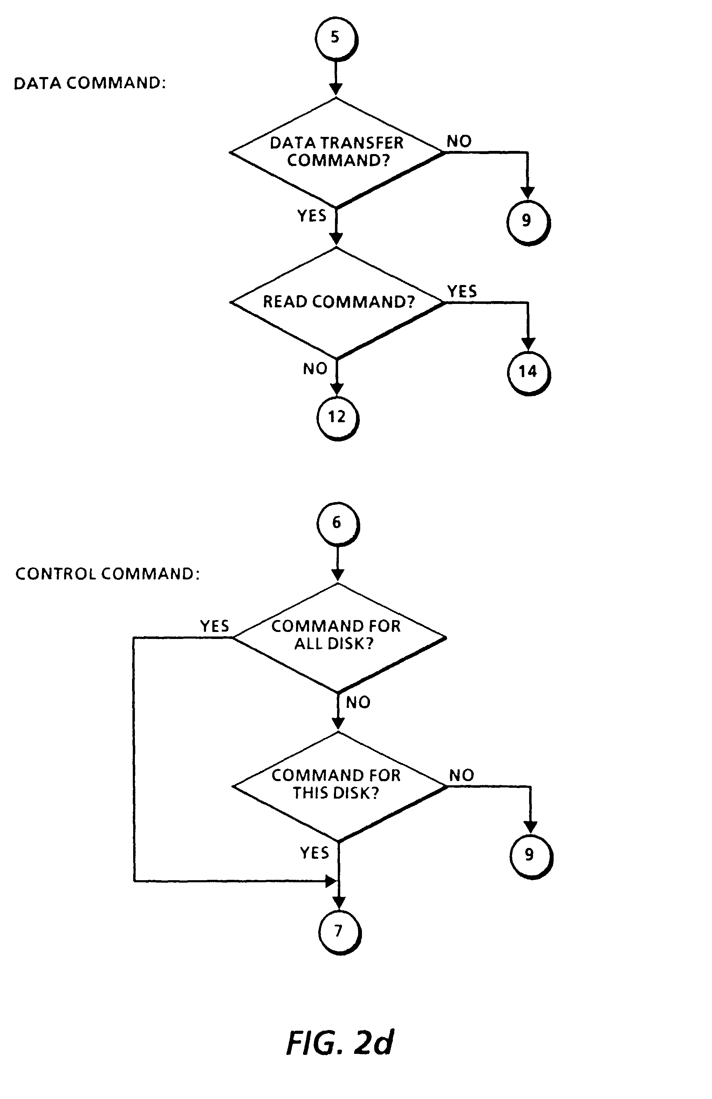

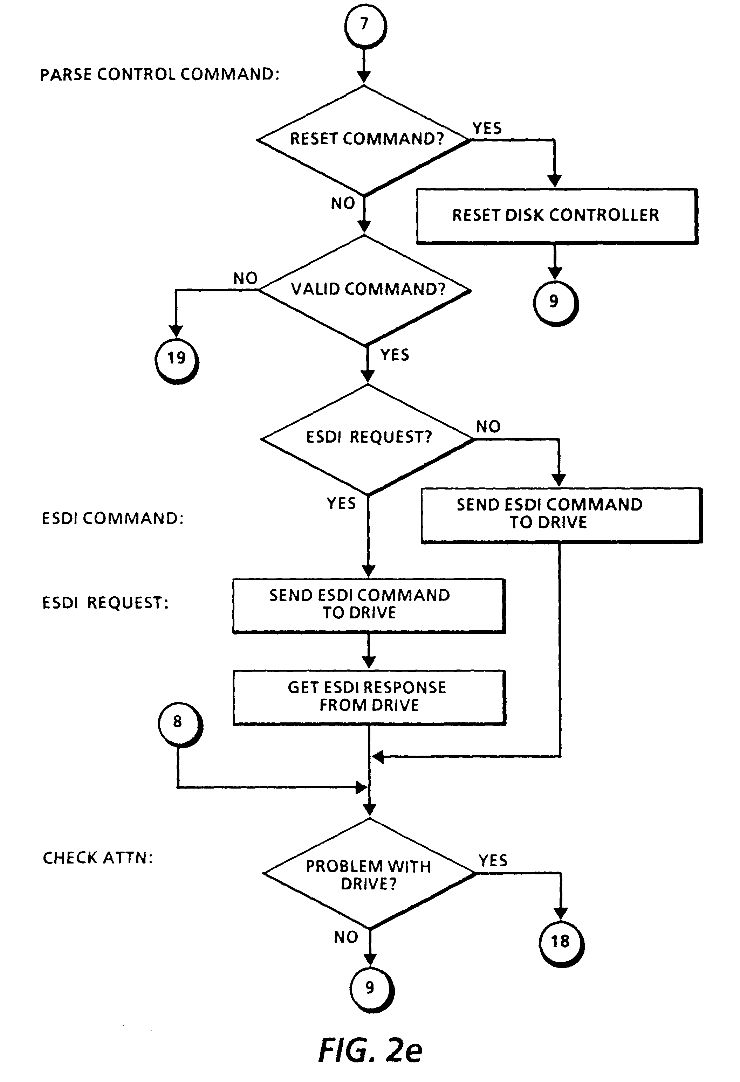

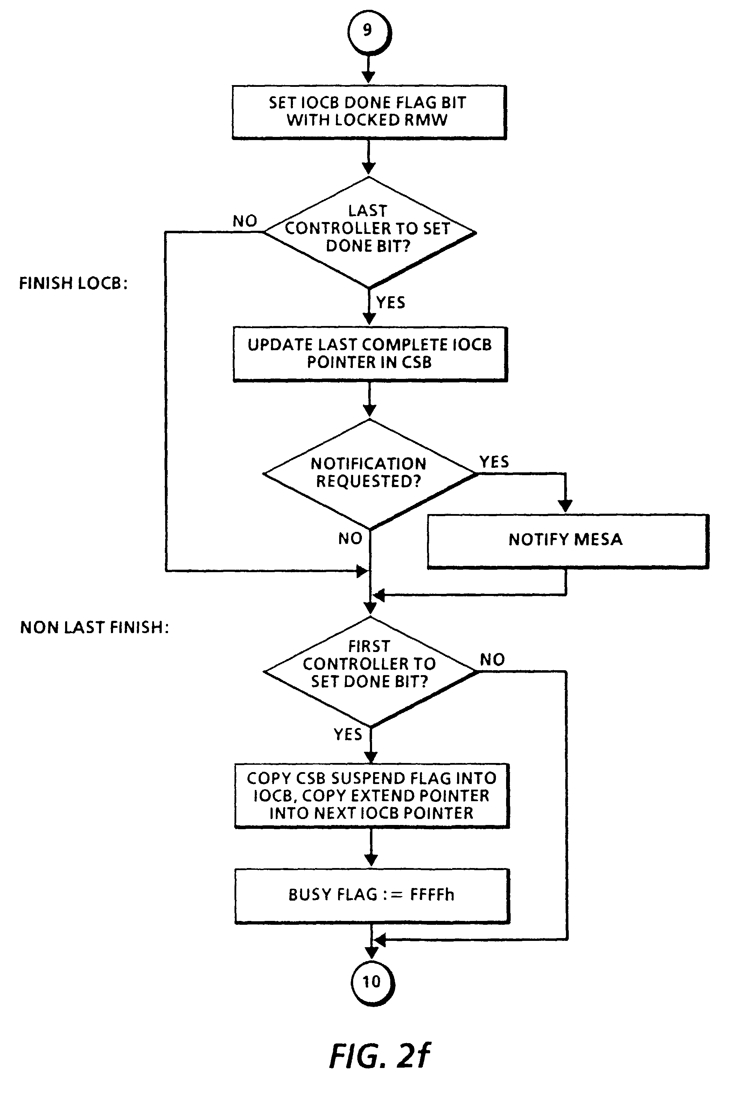

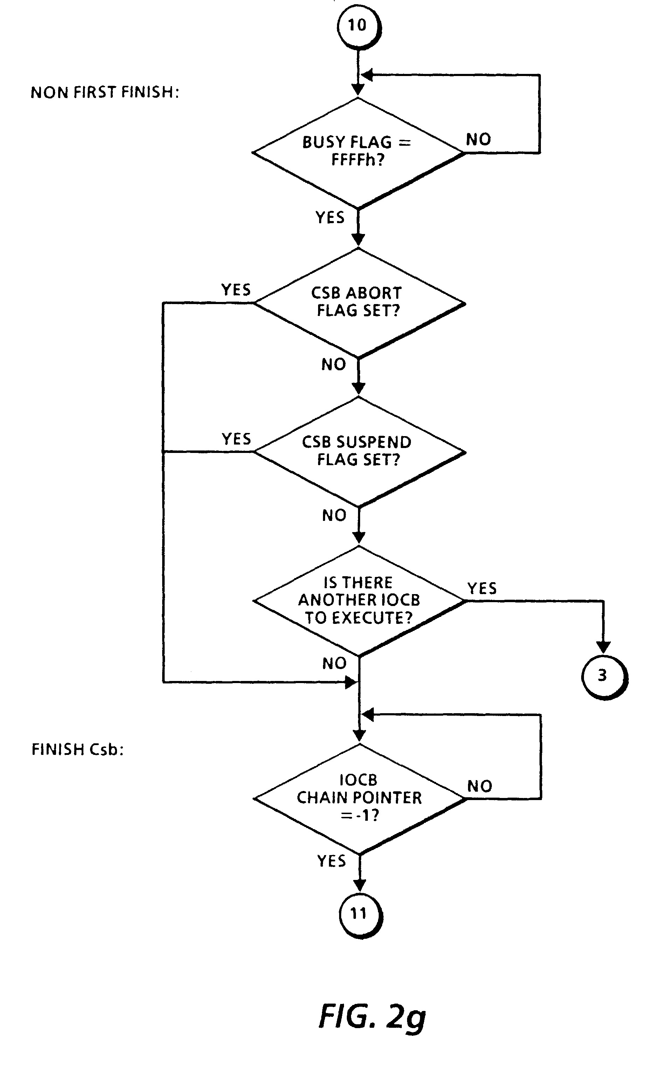

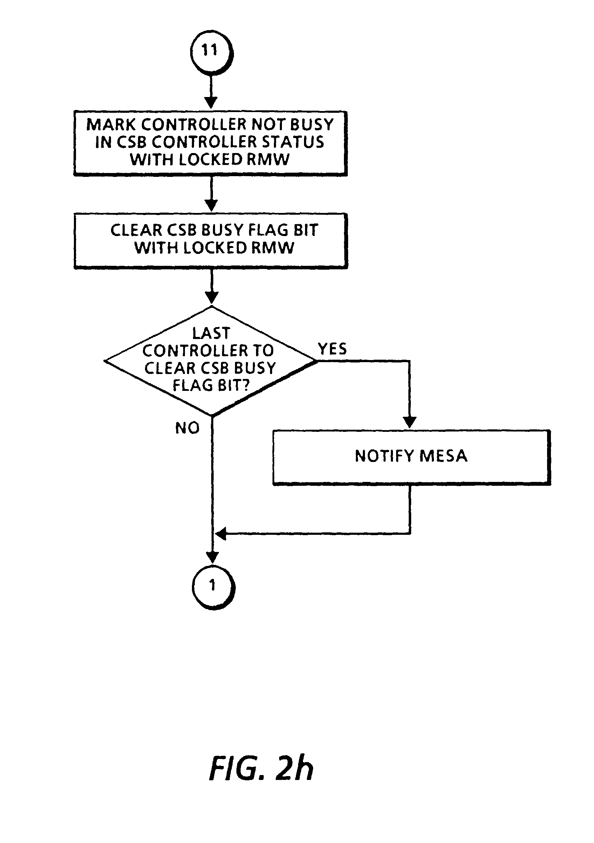

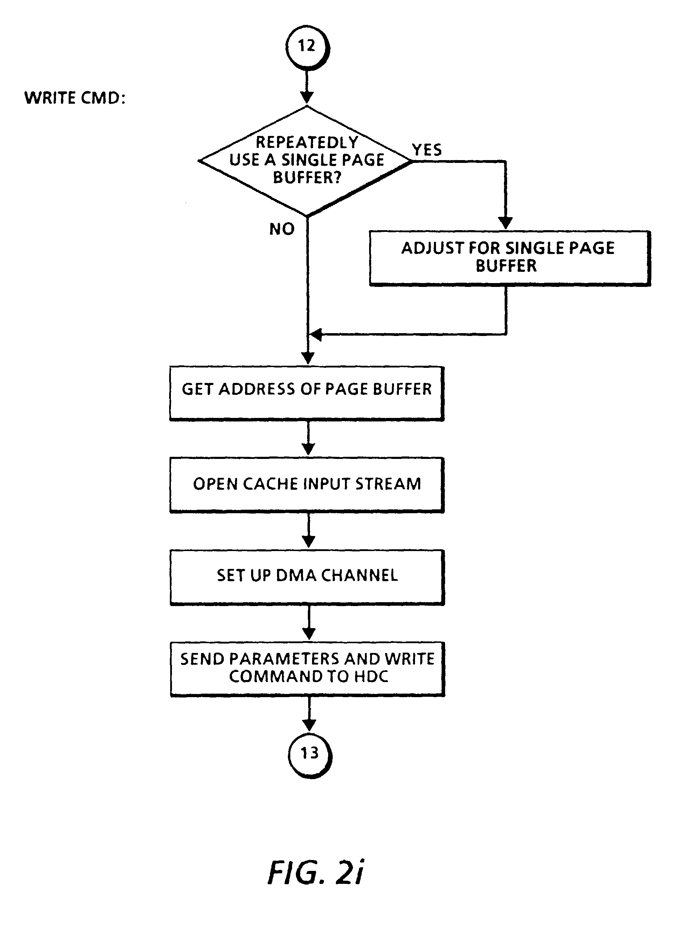

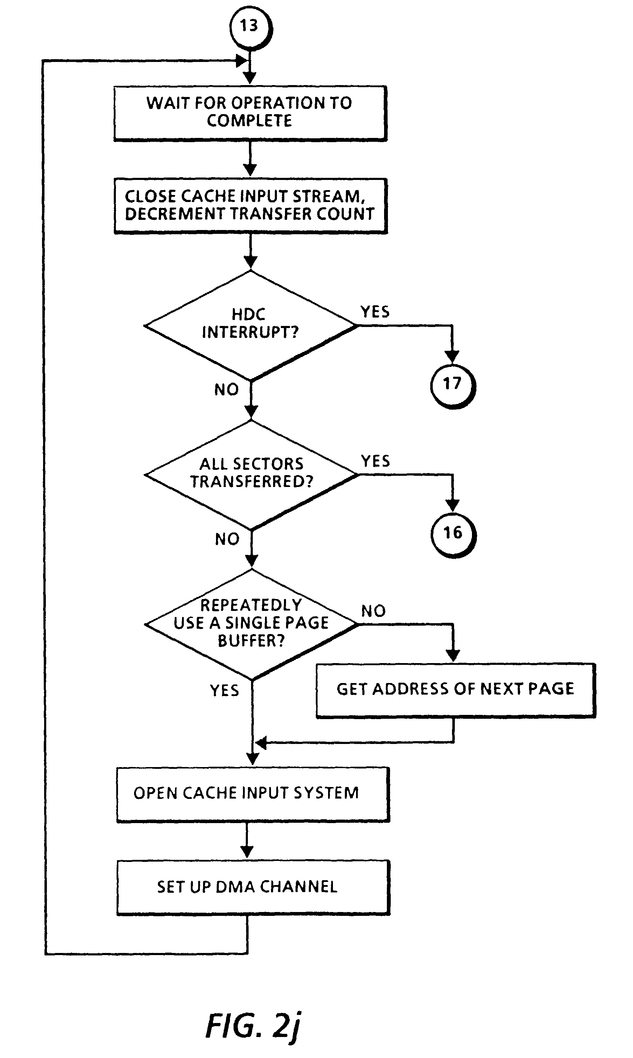

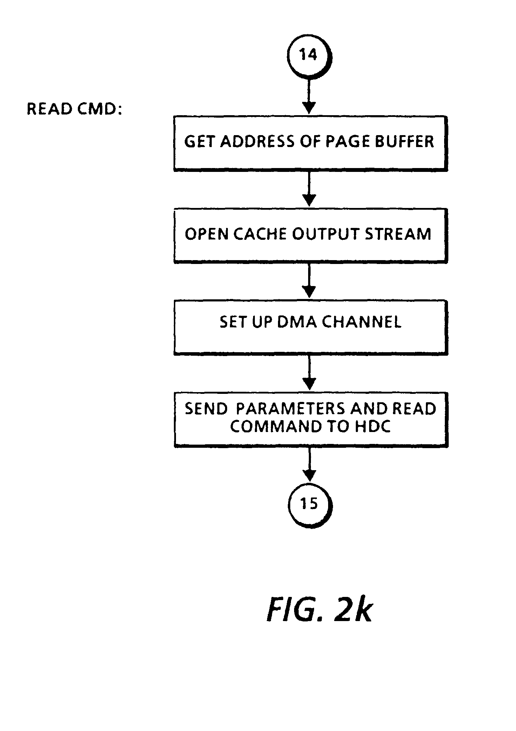

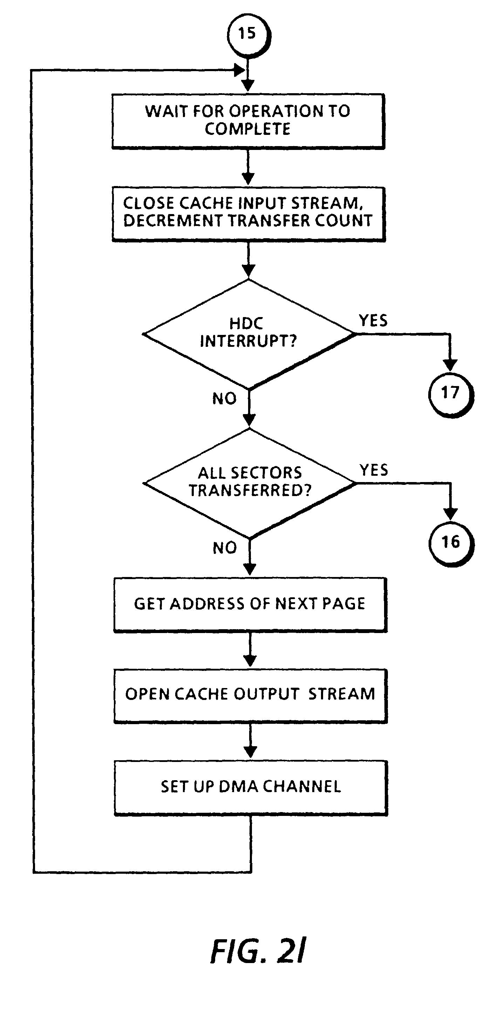

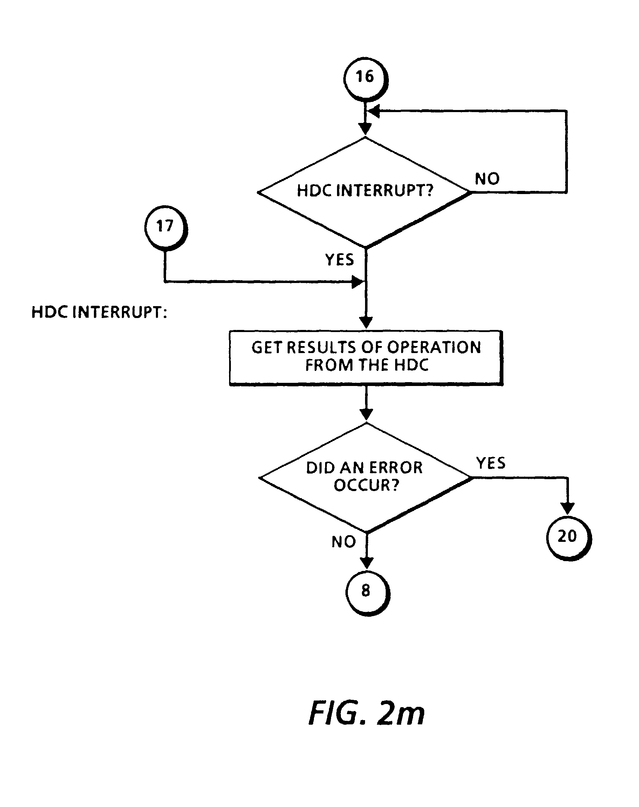

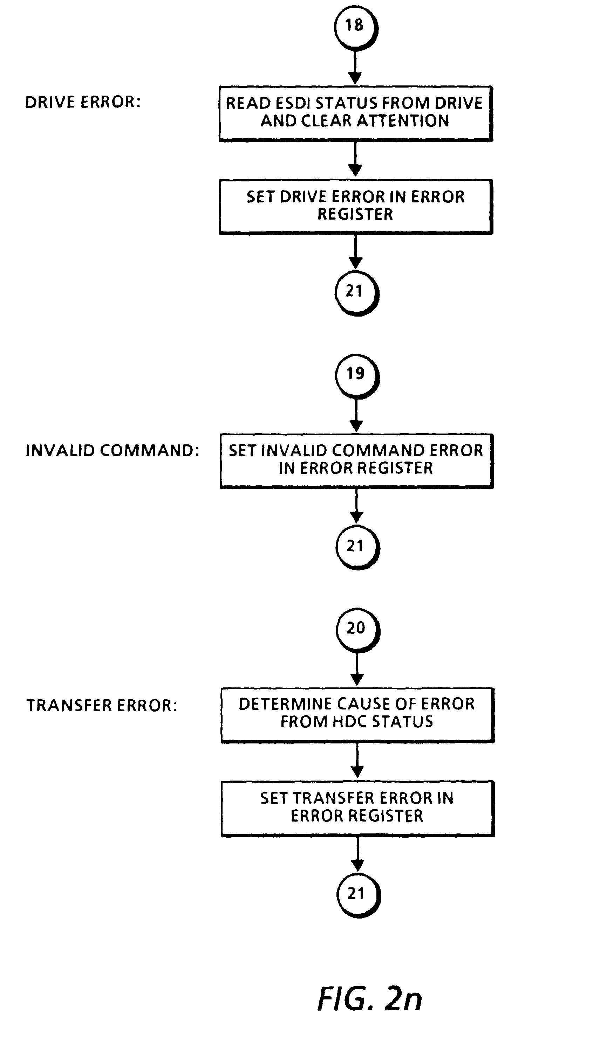

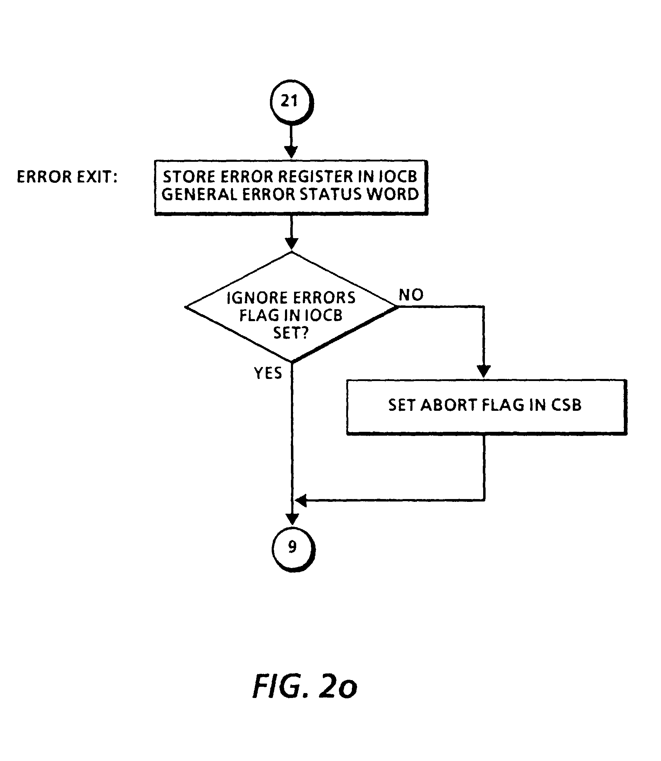

The basic operation of each controller is shown by the figure 2 flowchart. After a controller has been loaded with microcode and given a disk number and the total number of disks in the DISK, it enters the idle state. When the controller is in the idle loop, it continuously reads the Pointer to IOCB field in the CSB as long as the pointer is nil. This continuous polling activity does not consume system bus or memory bandwidth because of the action of the cache.

As soon as the pointer becomes non-nil, the controller uses the pointer as the start of the IOCB chain. (Note: when a pointer is nil it will contain the value -1, when a pointer is non-nil the high-order 8 bits will be zero and the low-order 4 bits will be zero). The controller then sets its bit in the CSB Busy Flag with a locked read-modify-write to indicate that it has begun to execute the IOCB chain. It also sets "controller active" in the CSB controller Status field with a locked read-modify-write. Locked read-modify-write transactions are necessary to maintain consistency of the flags since all of the controllers may attempt to access the Flags at the same instant.

The first controller to start prepares the IOCB for execution by the other controllers. The last controller to start resets the Pointer to the IOCB Chain in the CSB to nil. For this scheme to work, the controllers must be able to determine if they are the first controller to start or the last controller to start. The following mechanism is used to implement the scheme.

The CSB Busy Flag has four bits, one for each controller. As each controller detects that the Pointer to IOCB chain is not nil, it sets its corresponding bit in the Busy Flag with a locked read-modify-write cycle. After the locked cycle, the value of the CSB Busy Flag in the MRC is checked to see if it has just one bit set. If only one bit is set, then the controller knows that it is the first controller to act on the CSB. Likewise if the CSB Busy Flag is all ones after the locked access, then the controller knows that it was last to act on the CSB. This type of semaphore operation is the basis of all inter-controller communication.

Each controller performs its portion of each IOCB command independently. The actual order in which the controllers complete an IOCB depends on variables such as disk rotational latency. The first controller to start an IOCB may not be the first controller to finish the IOCB; therefore, the determination of which controller is first and which is last is made at each IOCB.

Each IOCB contains a Done Flag. Like the CSB Busy Flag there are four bits in the Done Flag, one for each controller. As each controller completes its operation on the IOCB, it sets its corresponding bit in the Done Flag with a locked read-modify-write cycle. After the locked cycle the value of the Done Flag in the MRC is checked to see if it is all ones. If it is all ones, then the controller knows that it is the last controller to complete operation on the IOCB and must perform the necessary steps to notify the software that the IOCB done. If the controller is the first to set a bit in the Done Flag, then it is the first controller to finish and must prepare the next IOCB for execution.

Maximum throughput is a feature of letting each controller proceed down the IOCB chain at its own rate. Delay from disk rotational latency is incurred only once at the start of a contiguous block of disk data. Ideally, the controllers only need to be synchronized at the end of the IOCB chain; however, this would make it impossible to suspend execution of the chain to service a higher priority IOCB. To allow the controllers to execute the IOCB chain at their own rate and still allow suspension of the chain, a Suspend Operation Flag is placed in the CSB.

When the Suspend Operation Flag in the CSB is set, no new IOCBs will be started by the controllers. The controllers will continue to execute IOCBs that have been started by a controller but not yet completed by all the controllers. When all of the partially completed IOCBs are done, the controllers enter the suspended state and wait for a new pointer to an IOCB chain.

The difficulty with suspending operation is guaranteeing that all of the controllers agree on which IOCB they should stop at. A similar problem exists when extending an IOCB chain on-the-fly, all controllers must find the end of the chain at the same place. The scheme used to implement the suspension requires a Suspend Operation Flag in each IOCB. The first controller to complete execution of an IOCB must copy the Suspend Operation Flag from the CSB into the IOCB. The first controller finished also copies the Extend Pointer in the IOCB to the Next IOCB Pointer field. After copying the Suspend Operation Flag and the Extend Pointer, the controller sets the IOCB Busy Flag to -1. The non-first controllers must wait before accessing the next IOCB until the Busy Flag in the IOCB is set to -1. After the Busy Flag is set to -1, the controllers check the Suspend Operation Flag in the IOCB. If it is set then the controller does not do any more and prepares to enter the suspended state.

If a suspend has not been requested, the controllers will perform the command specified by the IOCB. Upon completion of the command, each controller checks the Next IOCB Pointer. If this pointer is nil, then the end of the chain has been reached. If the pointer is non-nil, the controller will continue. The system software does not manipulate the Next IOCB Pointer to extend the chain. Instead, the disk driver software modifies the Extend Pointer in the last IOCB of the chain to point to the next IOCB. The controllers only look at the Next IOCB Pointer to determine if the chain continues, they do not test the Extend Pointer. The Extend Pointer is only accessed by the first controller to complete the IOCB where it is copied into the Next IOCB Pointer. This mechanism insures that all of the controllers detect the end of the list at the same point, regardless of when the system software attempts to extend the chain.

There is another flag in the CSB that is used to stop all of the controllers without regard to completion of the IOCBs. This is the Abort Operation Flag. Before starting to execute each IOCB, the controllers first inspect the Abort Operation Flag in the CSB. If the flag is set, then the controller enters the "aborted" state and does not execute the IOCB. After an abort, there may be several IOCBs on the chain that are at various stages of completion. These IOCBs must be cleaned up and requeued by the software.

Initialization of the DISK at boot time is done through the cache mailboxes. The descriptions and formats of the common memory structures are defined below.

CSB (Control/Status Block) format (16 words). The CSB is an octet aligned, 16-word block of memory whose location is passed to the controller upon initialization via a cache mailbox. The CSB is the primary area for communication between the controllers and the system software. There is a single CSB for each set of controllers that are working together to form a DISK. The format of the CSB is:
Last Complete IOCB (2 words). This is a two-word pointer to the most current IOCB that has been completed by all of the controllers. The last controller to set its bit in the Done Flag of an IOCB will copy the address of the IOCB into this pointer. All IOCBs in the chain up to and including the one referenced by this pointer are complete and may be removed from the chain.
Current IOCB (2 words). This is a two-word pointer to the most current IOCB that is being worked on by a controller. This may be several IOCBs past the "Last Complete IOCB" because the separate controllers are running asynchronously and proceed down the IOCB chain at different rates. When the controllers stop on an error abort, the IOCBs past the Last Complete up to and including the Current IOCB will be at various different stages of completion. These IOCBs will need to be cleaned up and requeued by the driver.
Abort Operation Flag (1 word). This flag is used to abort execution of the IOCB chain at the earliest convenient moment. Operations in progress are not halted, but no new operations are started. No attempt is made to get all the controllers to stop at the same IOCB. After an abort, all of the IOCBs past the Last Complete up to and including the Current IOCB will need to be checked for errors, cleaned up and requeued by the driver.
Suspend Operation Flag (1 word). This flag is used to suspend execution of the IOCB chain in an orderly fashion. When this flag is set, no new IOCBs in the chain will be started. All currently active IOCBs in this chain will be allowed to complete before the CSB is posted as not busy.
Wake Up Mask (1 word). This mask identifies the process that is to be notified upon completion of an IOCB that has the notify bit set, or when all of the controllers are stopped.
Priority (1 word). This word is used by the driver.
CSB Busy Flag (1 word, low-order 4 bits used for flag). This flag indicates that the controllers are executing the IOCB chain. This flag contains one bit for each controller. The first controller to set its bit in this flag is the only controller allowed to set the IOCB Busy Flag in the first IOCB. The last controller to set its bit in this flag also resets the Pointer to IOCB to nil. As each controller completes execution of the IOCB chain, it clears its bit in the flag. When the Pointer to IOCB is nil and this flag is zero, all disk controllers are idle and waiting for a new Pointer to IOCB. Update of this flag is performed using a locked read-modify-write.
Controller Status (1 word, low-order 8 bits used for flag). This byte contains the status of the controllers. There are two bits for each controller. The encoding of the two bits are:
   00 - Normal Termination,
   01 - Abnormal Termination,
   10 - Busy,
   11 - Suspended.
This byte is updated by each controller when it begins operation on the IOCB chain (i.e. enters the Busy state) and when it stops working on the IOCB chain (i.e. leaves the Busy state). Update of this byte is performed with a locked read-modify-write).
Pointer to IOCB Chain (2 words). This is a two-word pointer to the first IOCB in the IOCB chain. This pointer is initially nil (-1). When the controllers are in the idle state they poll this pointer. When the driver has constructed an IOCB chain, it writes the address of the start of the chain into this pointer. When each controller detects that the pointer is non-nil, it sets its bit in the CSB Busy Flag, reads the address of the IOCB chain, and begins executing the chain. The last controller to set its bit in the CSB Busy Flag will reset this pointer to nil.
Chain driver (2 words). This is a two-word pointer to the driver of the IOCB chain. This pointer is used only by the driver and is ignored by the controllers.
Chain Tail (2 words). This is a two-word pointer to the tail of the IOCB chain. This pointer is used only by the driver and is ignored by the controllers.

IOCB (I/O Control) format (29 words). The IOCB is an octet aligned, 29-word block of memory. The IOCB is used to send commands to the DISK. There is a single IOCB for each command. All of the controllers that are working together to form a DISK share the IOCB. IOCBs may be linked together to form a command chain. The fields in the IOCB are:
Extend Pointer (2 words): This is a two-word pointer to the next IOCB in the chain or nil if this is the last IOCB in the chain. The first controller to complete the IOCB will copy this pointer into the Next IOCB Pointer before setting the IOCB Busy Flag to FFFFh. This is used as an interlock to ensure that all controllers find the end of the chain at the same place. This pointer may be changed from nil to non-nil by the driver at any time. (Note: when a pointer is nil it will contain the value -1, when the pointer is non-nil the high-order 8 bits will be zero and the low-order 4 bits will be zero). The only way for the driver to be certain that the chain was successfully extended is to find the Busy Flag not equal to FFFFh after changing the Extend Pointer. Alternatively, the driver can just extend the chain and when the controllers give a completion interrupt check to see that the entire chain is complete. If the chain is not complete, it can be restarted.
Next IOCB Pointer (2 words). This is a two-word pointer to the next IOCB in the chain. This field is initially set to nil. The first controller to complete the IOCB will copy the Extend Pointer into this field before setting the IOCB Busy Flag to FFFFh. All non-first controllers must wait until the Busy flag is set to FFFFh before reading this pointer. All of the controllers use this field to determine the presence and address of the next IOCB in the chain. If this is the last IOCB in the chain, then the pointer will be nil.
Busy Flag (1 word). This flag indicates that the IOCB is currently being worked on by the controller(s). This flag is set to 00FFh only by the first controller to finish operation on the previous IOCB. All of the non-first controllers must wait until the Busy Flag is set to 00FFh before starting operation on the IOCB. This flag is set to FFFFh by the first controller to complete the IOCB.
Done Flag (1 word, 4 bits used for flag). This flag indicates that the IOCB is complete. There is a bit in this flag for each controller. As each controller completes its operation, it sets its corresponding bit in this flag with a locked read-modify-write cycle. The last controller to set its bit in this flag must also change the Last Complete IOCB Pointer in the CSB, and notify the driver if the notify bit in the Command is set. An IOCB is complete and may be removed from the chain when the Done Flag is set and the Busy Flag is FFFFh. The first controller to set its bit in this flag is the only controller allowed to set the Busy Flag in the next IOCB to 00FFh, if there is one.
Suspend Operation Flag (1 word). This flag is used to suspend operation of the controllers in the middle of an IOCB chain. This is used to interrupt a chain in order to service a higher priority stream. The Suspend Operation Flag in the IOCB is copied from the Suspend Operation Flag in the CSB by the first controller to complete the IOCB. It does this before it sets the Busy Flag to FFFFh. This sequence guarantees that all of the controllers will stop in an orderly manner at the same IOCB.
Task Priority (1 word). This field identifies to the driver which task this IOCB is associated with and the priority of the IOCB. This field is ignored by the controllers.
Command (1 word). This is the operation to be performed by the controllers.
Cylinder (1 word). This is the disk cylinder address for seek or data transfer.
Track (1 word, high-order 8 bits used). This is the disk track address for data transfer.
Sector (8 bits, part of previous word). This is the disk sector address for data transfer. This number must be divided by the number of controllers in the DISK to calculate the actual sector address for each controller.
Total Data Count (1 word). This is the total number of sectors of data to be transferred.
Data Chain Pointer (2 words). This is a two-word pointer to the start of the data chain. The data chain is a linked list of BDs (Buffer Descriptors).
Controller 0 Error Status (3 words). This field contains the status of the first controller if an error occurred, otherwise it is zero. The information will include: error type, sector number, drive status, DDC status.
Controller 1 Error Status (3 words). This field contains the status of the second controller if an error occurred, otherwise it is zero. The information will include: error type, sector number, drive status, DDC status.
Controller 2 Error Status (3 words). This field contains the status of the third controller if an error occurred, otherwise it is zero. The information will include: error type, sector number, drive status, DDC status.
Controller 3 Error Status (3 words). This field contains the status of the fourth controller if an error occurred, otherwise it is zero. The information will include: error type, sector number, drive status, DDC status.
Pointer to Operation (2 words). This field is used by the driver. It is ignored by the controllers.
Retried Count (1 word). This field is used by the driver. It is ignored by the controllers.
BD (Buffer Descriptor) format (4 words). The BD is a 4-word block of memory. The BD describes the length and location of the data buffer that is to be used as the data source or sink for an IOCB command. BDs may be linked together to form a data chain. The fields in the BD are:
   Next BD Pointer (1 word). This is a one-word pointer to the next Buffer Descriptor in the data chain. If this is the last BD in the chain, then it must be nil. All Buffer Descriptors are assumed to be in the same 64K segment so only a one-word pointer is needed.
   Data Pointer (2 words). This is a two-word pointer to the data buffer. The data buffer must be resident in physical memory and must not be write protected if it is the destination of a disk read operation.
   Data Count (1 word). This is the length of the data buffer in sectors. The data buffer must be an integer multiple of the sector size.

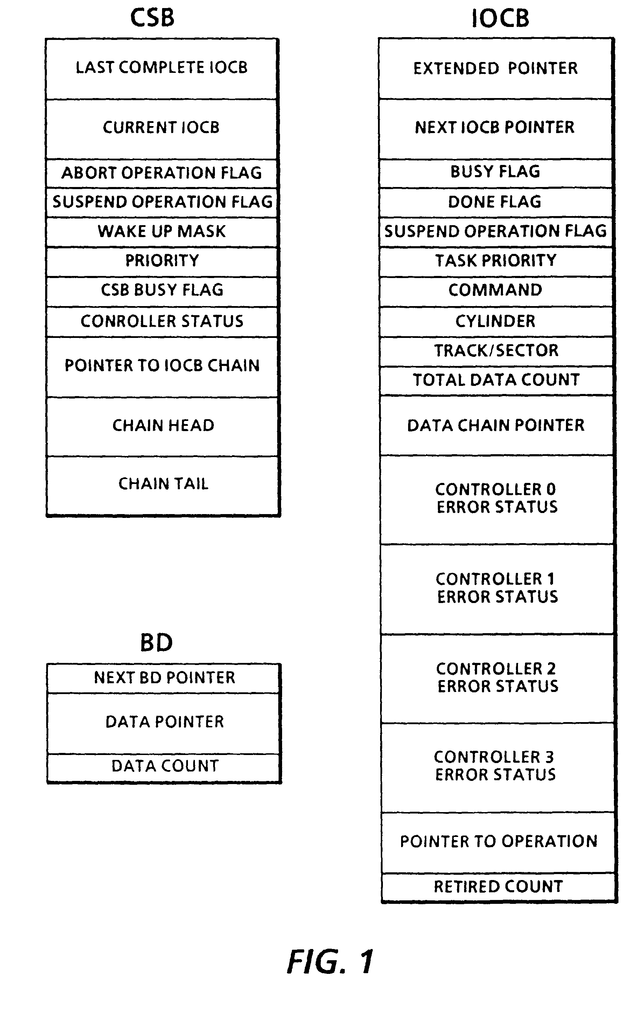

The control structures are shown in figure 1.

While the invention has been described with reference to a specific embodiment, it will be understood by those skilled in the art that various changes may be made and equivalents may be substituted for elements thereof without departing from the scope of the invention as claimed.

## Claims

1. A method of storing a block of data (16), residing at a location in memory means and segmented into a plurality of subblocks numbered from 0, onto a plurality n of equal disks (15) numbered from 0 to (n-1), comprising the steps of:
a) indicating a storage command and said location to said plurality of disks (15),
b) detecting said storage command using each numbered disk (15),
c) using each numbered disk (15) to determine subblocks to be stored onto said numbered disk by renumbering said plurality of subblocks modulo n and assigning same-numbered subblocks to said numbered disk (15), and
d) using each numbered disk (15) to initiate access to same-numbered subblocks in said memory means and store said same-numbered subblocks onto said numbered disk (15).

2. A method of retrieving a block of data (16), segmented into a plurality of subblocks numbered modulo n and stored on same-numbered disks of a plurality n of equal disks (15) numbered from 0 to (n-1), to a location in memory means, comprising the steps of:
a) indicating a retrieving command and said location to said plurality of disks (15),
b) detecting said retrieving command using each numbered disk (15),
c) using each numbered disk (15) to determine subblocks within said location to be restored from said numbered disk (15) by segmenting said location into a plurality of subblocks numbered modulo n and assigning same-numbered subblocks to said numbered disk (15), and
d) using each numbered disk (15) to initiate access to subblocks stored on said numbered disk (15) and restore said subblocks to same-numbered subblocks in said memory means.

3. A method as claimed in claim 1 or 2, wherein each numbered disk (15) operates at its own operating rate.

4. A method as claimed in claims 1 to 3, wherein angular positions of said numbered disks (15) are synchronized.

## Patentansprüche

1. Verfahren zum Speichern eines Datenblocks (16), der sich an einer Stelle in einem Speichermittel befindet und in eine Vielzahl von Unterblöcken, die von 0 beginnend numeriert sind, aufgeteilt ist, auf eine Vielzahl n von gleichen Platten (15), die von 0 bis (n-1) numeriert sind, enthaltend die Schritte:
a) Anzeigen eines Speicherbefehls und der Stelle an die Vielzahl von Platten (15),
b) Feststellen des Speicherbefehls durch jede numerierte Platte (15),
c) Verwenden jeder numerierten Platte (15), um Unterblöcke zu bestimmen, die auf der numerierten Platte zu speichern sind, durch Umnumerieren der Vielzahl von Unterblöcken mit Modulo n und Zuweisen gleichnumerierter Unterblöcke an die numerierte Platte (15), und
d) Verwenden jeder numerierten Platte (15), um einen Zugriff auf die gleichnumerierten Unterblöcke im Speichermittel einzuleiten und die gleichnumerierten Unterblöcke auf der numerierten Platte (15) zu speichern.

2. Verfahren zum Wiedergeben eines Datenblocks (16), der in eine Vielzahl von Unterblöcken aufgeteilt ist, die mit Modulo n numeriert und auf gleichnumerierten Platten einer Vielzahl n von gleichen Platten (15), die von 0 bis (n-1) numeriert sind, gespeichert sind, an eine Stelle in einem Speichermittel, enthaltend die Schritte:
a) Anzeigen eines Wiedergabebefehls und der Stelle an die Vielzahl von Platten (15),
b) Bestimmen des Wiedergabebefehls durch jede numerierte Platte (15),
c) Verwenden jeder numerierten Platte (15), um Unterblöcke innerhalb der Stelle zu bestimmen, die von der numerierten Platte (15) zurück zu speichern sind, durch Aufteilen der Stelle in eine Vielzahl von Unterblöcken, die Modulo n numeriert sind, und Zuweisen gleichnumerierter Unterblöcke an die numerierte Platte (15), und
d) Verwenden jeder numerierten Platte (15), um einen Zugriff auf die Unterblöcke, die auf der numerierten Platte (15) gespeichert sind, einzuleiten und die Unterblöcke an gleichnumerierte Unterblöcke im Speichermittel zurück zu speichern.

3. Verfahren nach Anspruch 1 oder 2, wobei jede numerierte Platte (15) mit ihrer eigenen Arbeitsgeschwindigkeit arbeitet.

4. Verfahren nach einem der Ansprüche 1 bis 3, wobei die Winkelstellungen der numerierten Platten (15) synchronisiert sind.

## Revendications

1. Procédé de mémorisation d'un bloc de données (16) résidant à un emplacement dans un moyen de mémoire et segmenté en une pluralité de sous-blocs numérotés à partir de 0, sur une pluralité n de disques égaux (15) numérotés de 0 à (n-1), comprenant les étapes consistant à :
a) indiquer une instruction de mémorisation et ledit emplacement à ladite pluralité de disques (15),
b) détecter ladite instruction de mémorisation en utilisant chaque disque numéroté (15),
c) utiliser chaque disque numéroté (15) afin de déterminer des sous-blocs devant être mémorisés sur ledit disque numéroté en renumérotant ladite pluralité de sous-blocs modulo n et en affectant des sous-blocs de même numéro audit disque numéroté (15), et
d) utiliser chaque disque numéroté (15) afin d'entreprendre l'accès aux sous-blocs de même numéro dans ledit moyen de mémoire et de mémoriser lesdits sous-blocs de même numéro sur ledit disque numéroté (15).

2. Procédé de récupération d'un bloc de données (16), segmenté en une pluralité de sous-blocs numérotés modulo n et mémorisés sur des disques de même numéro d'une pluralité n de disques égaux (15) numérotés de 0 à (n-1), à un emplacement dans un moyen de mémoire, comprenant les étapes consistant à :
a) indiquer une instruction de récupération et ledit emplacement à ladite pluralité de disques (15),
b) détecter ladite instruction de récupération en utilisant chaque disque numéroté (15),
c) utiliser chaque disque numéroté (15) afin de déterminer des sous-blocs à l'intérieur dudit emplacement qui doivent être rétablis à partir dudit disque numéroté (15) en segmentant ledit emplacement en une pluralité de sous-blocs numérotés modulo n et en affectant des sous-blocs de même numéro audit disque numéroté (15), et
d) utiliser chaque disque numéroté (15) afin d'entreprendre l'accès aux sous-blocs mémorisés sur ledit disque numéroté (15) et rétablir lesdits sous-blocs vers des sous-blocs de même numéro dans ledit moyen de mémoire.

3. Procédé- selon les revendications 1 ou 2, dans lequel chaque disque numéroté (15) fonctionne à son propre débit de fonctionnement.

4. Procédé selon les revendications 1 à 3, dans lequel des positions angulaires desdits disques numérotés (15) sont synchronisées.
